# EUROPÄISCHE PATENTSCHRIFT

(11) **EP 1 759 130 B1**
(45) Veröffentlichungstag und Bekanntmachung des Hinweises auf die Patenterteilung: **03.02.2010**
(21) Anmeldenummer: 05748277.0
(22) Anmeldetag: 04.06.2005
(51) Int. Cl.: F16H 63/48

(54) **PARKSPERRENVORRICHTUNG**
PARKING BRAKE SYSTEM
SYSTEME DE FREIN DE STATIONNEMENT

(30) Priorität: 22.06.2004 DE 102004030006
(43) Veröffentlichungstag der Anmeldung: 07.03.2007
(73) Patentinhaber: ZF Friedrichshafen AG, 88038 Friedrichshafen (DE)
(72) Erfinder: RÜHRINGER, Uwe, 88069 Tettnang (DE); SCHMID, Wolfgang, 88085 Langenargen (DE); SCHMIDT, Thilo, 88074 Meckenbeuren (DE)
(86) Internationale Anmeldenummer: PCT/EP2005/006026
(87) Internationale Veröffentlichungsnummer: WO 2005/124197

(56) Entgegenhaltungen:
- DE-A1- 19 834 156
- DE-A1- 19 837 832
- DE-C1- 4 317 257
- DE-C1- 10 157 459
- PATENT ABSTRACTS OF JAPAN Bd. 2000, Nr. 02, 29. Februar 2000 (2000-02-29) & JP 11 325243 A (NIPPON SOKEN INC; DENSO CORP), 26. November 1999 (1999-11-26)

## Beschreibung

Die Erfindung betrifft eine Parksperrenvorrichtung eines mit einem Automatgetriebe ausgeführten Antriebsstranges eines Fahrzeuges gemäß der im Oberbegriff des Patentanspruches 1 näher definierten Art.

Aus der gattungsgemäßen DE 198 34 156 A1 ist eine durch einen hydraulischen Druck ausrastbare Parksperrenvorrichtung für ein Fahrzeug bekannt, die durch eine Verriegelung in geöffnetem Zustand gehalten wird, bei welchem ein Abtrieb eines Fahrzeuges frei bewegbar ist. Die Verriegelung wird durch Bestromen eines Elektromagneten aktiviert. Wird der Elektromagnet stromlos geschaltet, wird die Parksperrenvorrichtung nicht länger in ihrer geöffneten Position gehalten und eine Sperrklinke greift in ein Parkzahnrad der Parksperrenvorrichtung ein, womit der Abtrieb gegen ein Verdrehen gesichert ist.

Dabei ist jedoch von Nachteil, dass die Parksperrenvorrichtung bei einem Systemausfall, bei welchem weder ein hydraulischer Druck zum Auslegen der eingelegten Parksperre noch elektrische Energie zum Halten der Parksperrenvorrichtung in ihrer ausgelegten bzw. geöffneten Position vorhanden ist und die Parksperrenvorrichtung daher in diesem Defaultzustand des Fahrzeugs den Abtrieb sperrt, vom Fahrer nicht deaktiviert werden kann, um das defekte Fahrzeug beispielsweise in eine Werkstatt abschleppen zu können.

Aus der DE 4317 257 C1 ist eine Parksperrenvorrichtung für automatische Getriebe von Kraftfahrzeugen bekannt, die aufgrund eines von einem Fahrer über eine Bedieneinrichtung ausgelösten Betätigungssignals das automatische Getriebe blockiert bzw. freigibt. Zusätzlich besitzt die Parksperrenvorrichtung eine mechanische Notentriegelung, mittels der die unter normalen Betriebsbedingungen hydraulisch betätigbare Parksperrenvorrichtung vom Fahrer manuell über einen mechanischen Wirkmechanismus entriegelbar ist. Ein Sperrriegel der mechanischen Wirkverbindung bzw. der mechanischen Notentriegelung wird über eine in einer Führungsnut geführte Verbindungsstange gesteuert.

Dabei ist es jedoch von Nachteil, dass eine Integration der in der DE 43 17 257 C1 vorgeschlagenen Notentriegelung in an sich bekannte Parksperrenvorrichtungen aufgrund des großen Bauraumbedarfes der Notentriegelung nachteilhafterweise nur schwer durchführbar ist.

Zusätzlich ist von Nachteil, dass die über die Notentriegelung geöffnete Parksperre bedarfsweise von dem Fahrer manuell nicht wieder verriegelbar ist, womit das Fahrzeug nach der Notentriegelung der Parksperrenvorrichtung über die Parksperrenvorrichtung ohne hydraulischen Druck nicht mehr gegen ein unerwünschtes Wegrollen sicherbar ist.

In der DE 198 48 733 A1 ist eine Parksperrenvorrichtung beschrieben, die bei einem Systemausfall von einem Fahrer bzw. einer Bedienperson bedarfsweise über eine Notentriegelung manuell entriegelbar sowie über eine Notverriegelungseinrichtung wiederum manuell in einen den Abtrieb sperrenden Zustand verbracht werden kann. Dazu wird die Parksperrenvorrichtung des Automatikgetriebes durch Betätigen einer von außerhalb des Kraftfahrzeuges zugänglichen Abschleppvorrichtung und der damit verbundenen axialen Bewegung der Wirkverbindung zwischen der Abschleppvorrichtung und der Notentriegelungseinrichtung am Automatikgetriebe entriegelt. Über eine Arretierung der Abschleppvorrichtung bleibt die Entriegelungseinrichtung so lange aktiviert, bis die Arretierung an der Abschleppvorrichtung durch eine Bedienperson manuell deaktiviert wird.

Diese Parksperrenvorrichtung weist jedoch den Nachteil auf, dass der mit der Abschleppvorrichtung zusammenwirkende Betätigungsmechanismus für die Notverriegelungs- und Notentriegelungseinrichtung außerhalb der Fahrgastzelle angeordnet ist, so dass eine Bedienperson bzw. ein Fahrer zur manuellen Betätigung der Parksperrenvorrichtung das Fahrzeug verlassen muss.

Des Weiteren ist von Nachteil, dass die Abschleppvorrichtung während eines Abschleppvorganges unter Umständen durch unzulässig hohe an der Abschleppvorrichtung angreifende Schleppkräfte derart beschädigt werden kann, dass die Notverriegelungs- und Notentriegelungseinrichtung über den Betätigungsmechanismus der Abschleppvorrichtung nicht mehr in der gewünschten Art und Weise ansteuerbar sind.

Der vorliegenden Erfindung liegt daher die Aufgabe zugrunde, eine Parksperrenvorrichtung zur Verfügung zu stellen, die von einer Bedienperson auf einfache Art und Weise manuell deaktivierbar sowie aktivierbar ist und einen geringen Bauraumbedarf aufweist.

Erfindungsgemäß wird diese Aufgabe mit einer Parksperrenvorrichtung gemäß den Merkmalen des Patentanspruches 1 gelöst.

Die erfindungsgemäße Parksperrenvorrichtung für einen mit einem Automatgetriebe ausgeführten Antriebsstrang eines Fahrzeuges, die einen Aktuator und einen von dem Aktuator betätigbaren Verriegelungsmechanismus umfasst, wobei ein Abtrieb des Antriebsstranges von dem Verriegelungsmechanismus in geschlossenem Zustand drehfest gehalten wird und in geöffnetem Zustand des Verriegelungsmechanismus drehbar ist und der Verriegelungsmechanismus in normalen Betriebsmodus des Fahrzeugs durch Beaufschlagen einer Kolbeneinheit des Aktuators mit einem Fluid entgegen einer in Schließrichtung des Verriegelungsmechanismus an der Kolbeneinheit angreifenden Federeinrichtung auslegbar ist und von einer über eine elektromagnetische Betätigungseinrichtung ansteuerbaren Rasteinrichtung, die die Kolbeneinheit in aktiviertem Zustand in einer dem geöffnetem Zustand des Verriegelungsmechanismus äquivalenten axialen Position fixiert, in geöffnetem Zustand gehalten wird, wobei die Rasteinrichtung über die elektromagnetische Betätigungseinrichtung deaktivierbar ist, und wobei der Verriegelungsmechanismus manuell über eine Notverriegelungseinrichtung verschließbar und über eine Notentriegelungseinrichtung öffenbar ist, ist vorteilhafterweise von einer Bedienperson manuell deaktivierbar sowie aktivierbar und durch einen geringen Bauraumbedarf gekennzeichnet ist.

Dies wird dadurch erreicht, dass die Notentriegelungseinrichtung und die Notverriegelungseinrichtung über einen gemeinsamen Wirkmechanismus derart betätigbar sind, dass manuelle Betätigungen des Wirkmechanismus in derselben Betätigungsrichtung jeweils alternierend zu einem Öffnen oder einem Schließen des Verriegelungsmechanismus führen.

Das bedeutet, dass jede manuelle Betätigung des Wirkmechanismus den aktuellen Status der Parksperrenvorrichtung verändert und die fahrerseitige intuitive Bedienung der Notentriegelungseinrichtung und der Notverriegelungseinrichtung in derselben Art und Weise über einen einzigen Wirkmechanismus mit geringem Bauraumbedarf durchführbar ist.

Ein derart ausgeführter Wirkmechanismus kann beispielsweise auf einfache Art und Weise bis in die Fahrgastzelle geführt werden, so dass ein Fahrer die manuelle Betätigung der Parksperre vom Fahrersitz aus durchführen kann ohne dabei ein Bremspedal lösen zu müssen, was bei defekter Feststellbremse und einer Hanglage unter Umständen vorteilhaft sein kann.

Vorteilhafte Weiterbildungen des Gegenstandes nach der Erfindung ergeben sich aus den Patentansprüchen und dem unter Bezugnahme auf die Zeichnung prinzipmäßig beschriebenen Ausführungsbeispiel.

Es zeigt:
Fig. 1 eine stark schematisierte Darstellung eines Teils einer erfindungsgemäß ausgeführten Parksperrenvorrichtung; und
Fig. 2 eine Frontansicht der Kolbeneinheit der Parksperrenvorrichtung gemäß Fig. 1 in einer schematisierten Einzeldarstellung.

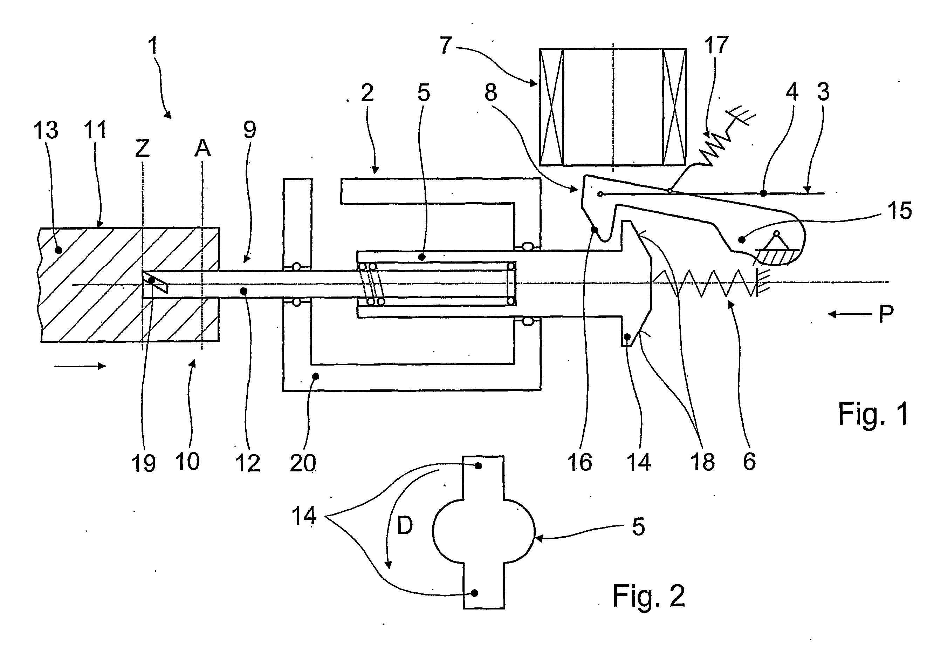

In Fig. 1 ist ein Teil einer Parksperrenvorrichtung 1 für einen mit einem Automatgetriebe ausgeführten Antriebsstrang eines Fahrzeuges in stark schematisierter Darstellung gezeigt. Die Parksperrenvorrichtung 1 umfasst einen Aktuator 2 und einen von dem Aktuator 2 betätigbaren Verriegelungsmechanismus 3, von welchem vorliegend lediglich eine Parksperrenstange 4 dargestellt ist. Die Parkstange 4 ist mit einer in an sich bekannter Art und Weise ausgeführten Parksperrenklinke wirkverbunden, die mit einem mit einem Abtrieb des Fahrzeugs verbundenen Parksperrenrad derart in Eingriff bringbar ist, dass der Abtrieb durch die Parksperrenklinke gegen ein ungewolltes Verdrehen gesichert ist. Das bedeutet, dass der Abtrieb des Antriebsstranges von dem Verriegelungsmechanismus 3 in geschlossenem Zustand drehfest gehalten wird und in geöffnetem Zustand des Verriegelungsmechanismus, bei dem die Parksperrenklinke nicht mit dem Parksperrenrad in Eingriff steht, drehbar ist.

In normalem Betriebsmodus des Fahrzeuges ist der Verriegelungsmechanismus durch Beaufschlagen einer Kolbeneinheit des Aktuators 2 mit einem Fluid entgegen einer in Schließrichtung des Verriegelungsmechanismus an der Kolbeneinheit 5 angreifenden Federeinrichtung 6 auslegbar. Des Weiteren ist der Verriegelungsmechanismus 3 von einer über eine elektromagnetische Betätigungseinrichtung 7 ansteuerbaren Rasteinrichtung 8, die die Kolbeneinheit 5 in aktiviertem Zustand in einer dem geöffneten Zustand des Verriegelungsmechanismus 3 äquivalenten axialen Position fixiert, in geöffnetem Zustand gehalten, wobei die Rasteinrichtung 8 in der später beschriebenen Art und Weise über die elektromagnetische Betätigungseinrichtung 7 deaktivierbar ist.

Der Verriegelungsmechanismus 3 ist von einer Bedienperson manuell über eine Notverriegelungseinrichtung 9 schließbar und über eine Notentriegelungseinrichtung 10 manuell öffenbar, wobei die Notentriegelungseinrichtung 10 und die Notverriegelungseinrichtung 9 über einen gemeinsamen Wirkmechanismus 11 derart betätigbar sind, dass manuelle Betätigungen des Wirkmechanismus 11 in derselben Betätigungsrichtung, wie beispielsweise Drücken, jeweils alternierend zu einem Öffnen oder einem Schließen des Verriegelungsmechanismus 3 führen.

Der Wirkmechanismus 11 weist vorliegend eine mit der Kolbeneinheit 5 verbundene Kolbenstange 12 und ein mit der Kolbenstange 12 derart zusammenwirkendes Betätigungselement 13, das von einer Bedienperson zur manuellen Ansteuerung der Parksperrenvorrichtung betätigt wird, auf, dass die Kolbenstange 12 bei von der Bedienperson aktiviertem Betätigungselement 13 an ihrem der Kolbeneinheit 5 abgewandten Ende mit einer in Richtung der Kolbeneinheit 5 wirkenden Steuerkraft beaufschlagt ist und gemeinsam mit der Kolbeneinheit 5 aus einer einem geöffneten Zustand des Verriegelungsmechanismus äquivalenten axialen Position A oder aus einer einem geschlossenen Zustand des Verriegelungsmechanismus 3 äquivalenten axialen Position Z axial verstellt und gleichzeitig um einen vordefinierten Drehwinkel verdreht wird.

Des Weiteren ist die Kolbeneinheit 5 an ihrem der Kolbenstange 12 abgewandten Ende an ihrem Umfang mit einem sich in Umfangsrichtung bereichsweise erstreckenden und in Fig. 2 näher dargestellten Sperrbereich 14 ausgebildet, der nach der Betätigung des Betätigungselements 13 ausgehend von der dem geschlossenen Zustand des Verriegelungsmechanismus 3 äquivalenten axialen Position Z derart mit der Rasteinrichtung 8 zusammenwirkt, dass die Kolbeneinheit 5 von der Rasteinrichtung 8 in der dem geöffnetem Zustand des Verriegelungsmechanismus 3 äquivalenten axialen Position A gehalten wird, da die Rasteinrichtung 8 in der in Fig. 1 gezeigten Darstellung aktiviert ist.

Ausgehend von dem vorbeschriebenen Betriebszustand der Parksperrenvorrichtung 1 bewirkt eine erneute bedienpersonseitige Betätigung des Betätigungselements 13 ausgehend von der dem geöffneten Zustand des Verriegelungsmechanismus 3 äquivalenten axialen Position A der Kolbeneinheit 5, dass die Kolbenstange 12 gemeinsam mit der Kolbeneinheit 5 derart gegenüber der Rasteinrichtung 8 verdreht wird, dass die Rasteinrichtung 8 deaktiviert wird und die Kolbeneinheit 5 von der Federeinrichtung 6 in ihre dem geschlossenen Zustand des Verriegelungsmechanismus 3 äquivalenten axiale Position Z verschoben wird.

Dabei wird die Rasteinrichtung 8 dadurch deaktiviert, dass der in Fig. 2 in der in Fig. 1 durch den Pfeil P gekennzeichneten Ansicht näher dargestellte Sperrbereich 14 in der durch den gekrümmt ausgeführten Pfeil D angezeigten Drehrichtung um einen Drehwinkel von 45° derart aus dem Eingriffsbereich der Rasteinrichtung 8 verdreht wird, dass die Kolbeneinheit 5 nicht mehr von der Rasteinrichtung 8 gehalten werden kann.

Die Verdrehung der Kolbenstange 12 und der damit fest verbundenen Kolbeneinheit 5 wird durch eine bedienpersonseitige axiale Betätigung des Betätigungselements 13 in Richtung der Kolbeneinheit 5 bewirkt. Die kombinierte Bewegung der Kolbeneinheit 5 aus translatorischer Verschiebung und einer Rotation um einen definierten Drehwinkel wird über die speziell ausgestaltete Verbindung zwischen der Kolbenstange 12 und dem Betätigungselement 13 realisiert. Die Wirkverbindung zwischen dem Betätigungselement 13 und der Kolbenstange 12 weist dazu das Wirkprinzip eines herkömmlichen Kugelschreibers auf, bei der eine Betätigung eines Druckelementes eine axiale Bewegung sowie eine Drehbewegung der Kugelschreibermine bewirkt, wobei die Kugelschreibermine nach jeder Betätigung des Druckelementes in einer von zwei axialen Endstellungen arretiert wird.

Bei der erfindungsgemäßen Parksperrenvorrichtung wird die Kolbeneinheit 5 aufgrund der axialen Betätigung des Betätigungselementes 13 in axialer Richtung verstellt und verdreht. Dadurch wird die Parksperrenvorrichtung von einer Bedienperson zur Notentriegelung und Notverriegelung jeweils in Richtung der Kolbeneinheit 5 manuell betätigt, wobei jede Betätigung des Betätigungselements 13 alternierend zu einem Verriegeln oder einem Entriegeln der Parksperreneinrichtung führt.

Dazu ist die Kolbenstange 12 an ihrem mit dem Betätigungselement 13 zusammenwirkenden Ende mit einer schrägen Einfräsung 19 ausgeführt, in die ein nicht näher dargestelltes Element des Betätigungselements 13 derart eingreift, dass eine axiale Verstellung des Betätigungselementes 13 die axiale Verschiebung und die gewünschte Verdrehung der Kolbenstange 12 und der damit verbunden Kolbeneinheit 5 zur Folge hat.

Die Betätigungseinrichtung 8 ist vorliegend mit einem in Richtung der Kolbeneinheit 5 angefederten Rasthebel 15 ausgeführt, der an seiner der Kolbeneinheit 5 zugewandten Stirnseite mit einer Führungsschräge 16 ausgebildet ist, über die der Rasthebel 15 bei einer axialen Verstellung der Kolbeneinheit 5 entgegen der Federkraft der dem Rasthebel 15 zugeordneten Federeinheit 17 geführt und dabei aus seiner dem geschlossenen Zustand des Verriegelungsmechanismus 3 äquivalenten Position in seine dem geöffneten Zustand des Verriegelungsmechanismus 3 äquivalente Position verschwenkt wird.

Darüber hinaus ist die Kolbeneinheit 5 an ihrer dem Rasthebel 15 zugewandten Stirnseite mit einer Führungsfläche 18 ausgebildet, über die der Rasthebel 15 bei einer axialen Verstellung der Kolbeneinheit 5 entgegen der Federkraft der dem Rasthebel 15 zugeordneten Federeinheit 17 geführt und dabei aus seiner dem geschlossenen Zustand des Verriegelungsmechanismus äquivalenten Position in seine dem geöffneten Zustand des Verriegelungsmechanismus äquivalente Position verschwenkt wird.

Die Führungsschräge 16 und die Führungsfläche 18 wirken dabei derart miteinander zusammen, dass der Rasthebel 15 bei einer axialen Verstellung der Kolbeneinheit 5 entgegen der Federkraft der Federeinheit 17 mit seiner Führungsschräge 16 über die Führungsfläche 18 der Kolbeneinheit 5 geführt wird und dabei aus seiner dem geschlossenen Zustand des Verriegelungsmechanismus 3 äquivalenten Position in seine dem geöffneten Zustand des Verriegelungsmechanismus 3 äquivalente Position ohne ein Verklemmen zwischen der Kolbeneinheit 5 und dem Rasthebel 15 zu bewirken verschwenkt wird.

Im normalen Betriebsmodus wird die Parksperrenvorrichtung 1 dadurch geöffnet, dass die Kolbeneinrichtung 5 in einem Gehäuse 20 mit einem Fluid, d. h. pneumatisch oder hydraulisch, derart beaufschlagt wird, dass die Kolbeneinheit 5 aus ihrer dem geschlossenen Zustand des Verriegelungsmechanismus 3 äquivalenten Position Z axial in Richtung der Rasteinrichtung 8 verstellt wird. Dabei wird der Rasthebel 15 der Rasteinrichtung 8 entgegen der Federkraft der Federeinheit 17 aus seiner dem geschlossenen Zustand des Verriegelungsmechanismus 3 äquivalenten Position in die in Fig. 1 dargestellte Position verschwenkt, wobei der Sperrbereich 14 in der in Fig. 1 dargestellten Position verbleibt, da die Kolbeneinheit 5 bei einer fluidischen Betätigung keine Drehung ausführt.

Solange die Kolbeneinheit 5 von dem in dem Gehäuse 20 vorliegenden Fluiddruck in der die Parksperrenvorrichtung 1 entriegelnden Position gehalten ist, bleibt die Parksperrenvorrichtung 1 aufgrund des Fluiddrucks geöffnet. Da dies aufgrund von Wirkungsgradverlusten jedoch unerwünscht ist, wird der Fluiddruck im Gehäuse 20 abgesenkt und die Kolbeneinheit 5 aufgrund der Federkraft der Federeinrichtung 6 in Richtung des Betätigungselements 13 verschoben.

Bei unbestromter elektromagnetischer Betätigungseinrichtung 7 wird die Kolbeneinheit 5 von dem Rasthebel 15 in der dem geöffneten Zustand des Verriegelungsmechanismus 3 äquivalenten Position A gehalten, da zwischen dem Rasthebel 15 und der Kolbeneinheit 5 aufgrund des sich in Wirkstellung befindlichen Sperrbereichs 14 eine kraftschlüssige Verbindung vorliegt, über die die Kolbeneinheit 5 in der geöffneten Stellung gehalten wird.

Liegt eine entsprechende fahrerseitige oder getriebesteuerungsseitige Anforderung zur Verriegelung der Parksperrenvorrichtung vor, wird die elektromagnetische Betätigungseinrichtung 7, welche vorliegend als Haltemagnet ausgeführt ist, derart bestromt, dass der Rasthebel 15 derart von der Kolbeneinheit 5 in Richtung der elektromagnetischen Betätigungseinrichtung 7 verschwenkt wird, dass die kraftschlüssige Verbindung zwischen dem Rasthebel 15 und der Kolbeneinheit 5 gelöst ist und die Kolbeneinheit 5 von der Federeinrichtung 6 in ihre dem geschlossenen Zustand des Verriegelungsmechanismus 3 äquivalente Position Z verstellt wird.

Die vorbeschriebene erfindungsgemäß ausgeführte Parksperrenvorrichtung ist durch eine intuitive Bedienung des Fahrers gekennzeichnet, da er über dieselbe Betätigung eines Notmechanismus bzw. des Wirkmechanismus 11 den Zustand der Parksperre auf einfache Art und Weise zwischen einem eingelegten bzw. einen Abtrieb sperrenden Zustand und einem ausgelegten Zustand, bei der Abtrieb frei drehbar ist, wechseln kann.

Des Weiteren liegt der Parksperrenvorrichtung nach der Erfindung der Vorteil zugrunde, das der für die Betätigung der Notverriegelungseinrichtung und der Notentriegelungseinrichtung vorgesehene gemeinsame Wirkmechanismus lediglich eine Durchführung durch das Gehäuse des Getriebes nach außen erfordert, wodurch eine Abdichtung des Innenraums des Getriebes gegenüber seiner Umgebung vereinfacht ist.

### Bezugszeichen

- 1: Parksperrenvorrichtung
- 2: Aktuator
- 3: Verriegelungsmechanismus
- 4: Parksperrenstange
- 5: Kolbeneinheit
- 6: Federeinrichtung
- 7: elektromagnetische Betätigungseinrichtung
- 8: Rasteinrichtung
- 9: Notverriegelungseinrichtung
- 10: Notentriegelungseinrichtung
- 11: Wirkmechanismus
- 12: Kolbenstange
- 13: Betätigungselement
- 14: Sperrbereich
- 15: Rasthebel
- 16: Führungsschräge
- 17: Federeinheit
- 18: Führungsfläche
- 19: Einfräsung
- 20: Gehäuse

## Patentansprüche

1. Parksperrenvorrichtung (1) für einen mit einem Automatgetriebe ausgeführten Antriebsstrang eines Fahrzeugs, welcher einen Aktuator (2) und einen von dem Aktuator (2) betätigbaren Verriegelungsmechanismus (3) umfasst, wobei ein Abtrieb des Antriebsstranges von dem Verriegelungsmechanismus (3) in geschlossenem Zustand drehfest gehalten wird und in geöffnetem Zustand des Verriegelungsmechanismus (3) drehbar ist, wobei der Verriegelungsmechanismus (3) in normalem Betriebsmodus des Fahrzeugs durch Beaufschlagen einer Kolbeneinheit (5) des Aktuators (2) mit einem Fluid entgegen einer in Schließrichtung des Verriegelungsmechanismus an der Kolbeneinheit (5) angreifenden Federeinrichtung (6) auslegbar ist und von einer über eine elektromagnetische Betätigungseinrichtung (7) ansteuerbaren Rasteinrichtung (8), die die Kolbeneinheit (5) in aktiviertem Zustand in einer dem geöffneten Zustand des Verriegelungsmechanismus (3) äquivalenten axialen Position (A) fixiert, in geöffnetem Zustand gehalten wird, wobei die Rasteinrichtung (8) über die elektromagnetische Betätigungseinrichtung (7) deaktivierbar ist, **dadurch gekennzeichnet, daß** der Verriegelungsmechanismus (3) manuell über eine Notverriegelungseinrichtung (9) schließbar und über eine Notentriegelungseinrichtung (10) öffenbar ist und wobei die Notentriegelungseinrichtung (10) und die Notverriegelungseinrichtung (9) über einen gemeinsamen Wirkmechanismus (11) derart betätigbar sind, dass manuelle Betätigungen in derselben Betätigungsrichtung des Wirkmechanismus (11) jeweils alternierend zu einem Öffnen oder einem Schließen des Verriegelungsmechanismus (3) führen.

2. Parksperrenvorrichtung nach Anspruch 1, **dadurch gekennzeichnet, dass** der Wirkmechanismus (11) eine mit der Kolbeneinheit (5) verbundene Kolbenstange (12) und ein mit der Kolbenstange (12) derart zusammenwirkendes Betätigungselement (13) für eine Bedienperson aufweist, dass die Kolbenstange (12) bei von der Bedienperson aktiviertem Betätigungselement (13) an ihrem der Kolbeneinheit (5) abgewandten Ende mit einer in Richtung der Kolbeneinheit (5) wirkenden Steuerkraft beaufschlagt ist und gemeinsam mit der Kolbeneinheit (5) aus einer einem geöffneten Zustand des Verriegelungsmechanismus (3) äquivalenten axialen Position (A) oder aus einer einem geschlossenen Zustand des Verriegelungsmechanismus (3) äquivalenten axialen Position (Z) axial verstellt und gleichzeitig um einen vordefinierten Drehwinkel verdreht wird.

3. Parksperrenvorrichtung nach Anspruch 2, **dadurch gekennzeichnet, dass** die Kolbenstange (12) nach Beendigung der bedienpersonseitigen Betätigung des Betätigungselementes (13) ausgehend von der dem geöffneten Zustand des Verriegelungsmechanismus (3) äquivalenten axialen Position (A) von der an der Kolbeneinheit (5) angreifenden Federeinrichtung (6) in die dem geschlossenen Zustand des Verriegelungsmechanismus (3) äquivalente axiale Position verstellt wird.

4. Parksperrenvorrichtung nach Anspruch 2 oder 3, **dadurch gekennzeichnet, dass** die Kolbenstange (12) nach Beendigung der bedienpersonseitigen Betätigung des Betätigungselementes (13) ausgehend von der dem geschlossenen Zustand des Verriegelungsmechanismus (3) äquivalenten axialen Position (Z) von der an der Kolbeneinheit (5) angreifenden Federeinrichtung (6) in die dem geöffneten Zustand des Verriegelungsmechanismus (3) äquivalente axiale Position (A) verschoben wird.

5. Parksperrenvorrichtung nach einem der Ansprüche 2 bis 4, **dadurch gekennzeichnet, dass** die Kolbeneinheit (5) an ihrem der Kolbenstange (12) abgewandten Ende an ihrem Umfang mit einem sich in Umfangsrichtung wenigstens bereichsweise erstreckenden Sperrbereich (14) ausgebildet ist, der nach der Betätigung des Betätigungselementes (13) ausgehend von einer der dem geschlossenen Zustand des Verriegelungsmechanismus (3) äquivalenten axialen Position (Z) derart mit der Rasteinrichtung (8) zusammenwirkt, dass die Kolbeneinheit (5) von der Rasteinrichtung (8) in der dem geöffneten Zustand des Verriegelungsmechanismus (3) äquivalenten axialen Position (A) gehalten wird.

6. Parksperrenvorrichtung nach Anspruch 5, **dadurch gekennzeichnet, dass** der Sperrbereich (14) nach einer Betätigung des Betätigungselementes (13) ausgehend von der dem geöffneten Zustand des Verriegelungsmechanismus (3) äquivalenten axialen Position (A) der Kolbeneinheit (5) derart gegenüber der Rasteinrichtung (8) verdreht ist, dass eine Aktivierung der Rasteinrichtung (8) unterbleibt und die Kolbeneinheit (5) von der Federeinrichtung (6) in ihre dem geschlossenen Zustand des Verriegelungsmechanismus (3) Kolbeneinheit (5) äquivalente axiale Position (Z) verschoben wird.

7. Parksperrenvorrichtung nach einem der Ansprüche 1 bis 6, **dadurch gekennzeichnet, dass** die Rasteinrichtung (8) mit einem in Richtung der Kolbeneinheit (5) angefederten Rasthebel (15) ausgebildet ist.

8. Parksperrenvorrichtung nach Anspruch 7, **dadurch gekennzeichnet, dass** der Rasthebel (15) an einer der Kolbeneinheit (5) zugewandten Stirnseite mit einer Führungsschräge (16) ausgebildet ist, über die der Rasthebel (15) bei einer axialen Verstellung der Kolbeneinheit (5) entgegen der Federkraft der dem Rasthebel (15) zugeordneten Federeinheit (17) geführt und dabei aus seiner dem geschlossenen Zustand des Verriegelungsmechanismus (3) äquivalenten Position in seine dem geöffneten Zustand des Verriegelungsmechanismus (3) äquivalente Position verschwenkt wird.

9. Parksperrenvorrichtung nach Anspruch 7 oder 8, **dadurch gekennzeichnet, dass** die Kolbeneinheit (5) an einer dem Rasthebel (15) zugewandten Stirnseite mit einer Führungsfläche (18) ausgebildet ist, über die der Rasthebel (15) bei einer axialen Verstellung der Kolbeneinheit (5) entgegen der Federkraft der dem Rasthebel (15) zugeordneten Federeinheit (17) geführt und dabei aus seiner dem geschlossenen Zustand des Verriegelungsmechanismus (3) äquivalenten Position in seine dem geöffneten Zustand des Verriegelungsmechanismus (3) äquivalente Position verschwenkt wird.

10. Parksperrenvorrichtung nach Anspruch 9, **dadurch gekennzeichnet, dass** die Führungsschräge (16) und die Führungsfläche (18) derart mit einander zusammenwirken, dass der Rasthebel (15) bei einer axialen Verstellung der Kolbeneinheit (5) entgegen der Federkraft der dem Rasthebel (15) zugeordneten Federeinheit (17) mit seiner Führungsschräge (16) über die Führungsfläche (18) der Kolbeneinheit (5) geführt und dabei aus seiner dem geschlossenen Zustand des Verriegelungsmechanismus (3) äquivalenten Position in seine dem geöffneten Zustand des Verriegelungsmechanismus (3) äquivalente Position verschwenkt wird.

## Claims

1. Parking lock apparatus (1) for a drive train of a vehicle, which drive train is configured with an automated gearbox and comprises an actuator (2) and a locking mechanism (3) which can be actuated by the actuator (2), an output means of the drive train being held in a rotationally locked manner by the locking mechanism (3) in the closed state and it being possible to rotate it in the open state of the locking mechanism (3), it being possible, in the normal operating mode of the vehicle, for the locking mechanism (3) to be deflected by loading a piston unit (5) of the actuator (2) with a fluid counter to a spring device (6) which acts on the piston unit (5) in the closed direction of the locking mechanism and being held in the open state by a latching device (8) which can be actuated via an electromagnetic actuating device (7) and fixes the piston unit (5) in the activated state in an axial position (A) which is equivalent to the open state of the locking mechanism (3), it being possible for the latching device (8) to be deactivated via the electromagnetic actuating device (7), **characterized in that** the locking mechanism (3) can be closed manually via an emergency locking device (9) and can be opened via an emergency unlocking device (10), and it being possible for the emergency unlocking device (10) and the emergency locking device (9) to be actuated via a common active mechanism (11) in such a way that manual actuations in the same actuating direction of the active mechanism (11) lead in each case in an alternating manner to opening or closing of the locking mechanism (3).

2. Parking lock apparatus according to Claim 1, **characterized in that** the active mechanism (11) has a piston rod (12) which is connected to the piston unit (5) and an actuating element (13) for an operator, which actuating element (13) interacts with the piston rod (12) in such a way that, when the actuating element (13) is activated by the operator, the piston rod (12) is loaded at its end which faces away from the piston unit (5) with a control force which acts in the direction of the piston unit (5), and, together with the piston unit (5), is adjusted axially out of an axial position (A) which is equivalent to an open state of the locking mechanism (3) or out of an axial position (Z) which is equivalent to a closed state of the locking mechanism (3), and is rotated at the same time by a predefined rotary angle.

3. Parking lock apparatus according to Claim 2, **characterized in that**, after the actuation of the actuating element (13) by the operator has ended, the piston rod (12) is adjusted by the spring device (6) which acts on the piston unit (5), starting from the axial position (A) which is equivalent to the open state of the locking mechanism (3), into the axial position which is equivalent to the closed state of the locking mechanism (3).

4. Parking lock apparatus according to Claim 2 or 3, **characterized in that,** after the actuation of the actuating element (13) by the operator has ended, the piston rod (12) is displaced by the spring device (6) which acts on the piston unit (5), starting from the axial position (Z) which is equivalent to the closed state of the locking mechanism (3), into the axial position (A) which is equivalent to the open state of the locking mechanism (3).

5. Parking lock apparatus according to one of Claims 2 to 4, **characterized in that**, at its end which faces away from the piston rod (12), the piston unit (5) is configured on its circumference with a locking region (14) which extends in the circumferential direction at least in regions and, after the actuation of the actuating element (13), starting from an axial position (Z) which is equivalent to the closed state of the locking mechanism (3), interacts with the latching device (8) in such a way that the piston unit (5) is held by the latching device (8) in the axial position (A) which is equivalent to the open state of the locking mechanism (3).

6. Parking lock apparatus according to Claim 5, **characterized in that**, after an actuation of the actuating element (13), starting from the axial position (A) of the piston unit (5) which is equivalent to the open state of the locking mechanism (3), the locking region (14) is rotated with respect to the latching device (8) in such a way that an activation of the latching device (8) is suppressed and the piston unit (5) is displaced by the spring device (6) into its axial position (Z) which is equivalent to the closed state of the locking mechanism (3).

7. Parking lock apparatus according to one of Claims 1 to 6, **characterized in that** the latching device (8) is configured with a latching lever (15) which is sprung in the direction of the piston unit (5).

8. Parking lock apparatus according to Claim 7, **characterized in that**, on an end side which faces the piston unit (5), the latching lever (15) is configured with a guide slope (16), via which the latching lever (15) is guided counter to the spring force of the spring unit (17) which is assigned to the latching lever (15) in the case of an axial adjustment of the piston unit (5), and in the process is pivoted out of its position which is equivalent to the closed state of the locking mechanism (3) into its position which is equivalent to the open state of the locking mechanism (3).

9. Parking lock apparatus according to Claim 7 or 8, **characterized in that**, on an end side which faces the latching lever (15), the piston unit (5) is configured with a guide face (18), via which the latching lever (15) is guided counter to the spring force of the spring unit (17) which is assigned to the latching lever (15) in the case of an axial adjustment of the piston unit (5), and in the process is pivoted out of its position which is equivalent to the closed state of the locking mechanism (3) into its position which is equivalent to the open state of the locking mechanism (3).

10. Parking lock apparatus according to Claim 9, **characterized in that** the guide slope (16) and the guide face (18) interact with one another in such a way that the latching lever (15) is guided with its guide slope (16) over the guide face (18) of the piston unit (5) counter to the spring force of the spring unit (17) which is assigned to the latching lever (15) in the case of an axial adjustment of the piston unit (5), and in the process is pivoted out of its position which is equivalent to the closed state of the locking mechanism (3) into its position which is equivalent to the open state of the locking mechanism (3).

## Revendications

1. Système de frein de stationnement (1) pour un train de transmission d'un véhicule réalisé avec une transmission automatique, qui comprend un actionneur (2) et un mécanisme de verrouillage (3) pouvant être actionné par l'actionneur (2), une prise de force du train de transmission étant maintenue de manière solidaire en rotation par le mécanisme de verrouillage (3) dans l'état fermé, et pouvant tourner dans l'état ouvert du mécanisme de verrouillage (3), le mécanisme de verrouillage (3), en mode de fonctionnement normal du véhicule, pouvant être conçu par sollicitation d'une unité de piston (5) de l'actionneur (2) avec un fluide à l'encontre d'un dispositif de ressort (6) venant en prise dans la direction de fermeture du mécanisme de verrouillage sur l'unité de piston (5), et étant maintenu dans l'état ouvert par un dispositif d'encliquetage (8) pouvant être commandé par le biais d'un dispositif d'actionnement électromagnétique (7), qui fixe l'unité de piston (5) dans l'état activé dans une position (A) axiale équivalente à l'état ouvert du mécanisme de verrouillage (3), le dispositif d'encliquetage (8) pouvant être désactivé par le biais du dispositif d'actionnement électromagnétique (7), **caractérisé en ce que** le mécanisme de verrouillage (3) peut être fermé manuellement par le biais d'un dispositif de verrouillage d'urgence (9) et pouvant être ouvert par le biais d'un dispositif de déverrouillage d'urgence (10), le dispositif de déverrouillage d'urgence (10) et le dispositif de verrouillage d'urgence (9) pouvant être actionnés par le biais d'un mécanisme d'activation commun (11) de telle sorte que des actionnements manuels dans le même sens d'activation du mécanisme d'activation (11) conduisent à chaque fois en alternance à une ouverture ou à une fermeture du mécanisme de verrouillage (3).

2. Système de frein de stationnement selon la revendication 1, **caractérisé en ce que** le mécanisme d'activation (11) présente une tige de piston (12) connectée à l'unité de piston (5) et un élément d'actionnement (13) pour un opérateur coopérant avec la tige de piston (12) de telle sorte que la tige de piston (12), lorsque l'élément d'actionnement (13) est activé par l'opérateur, soit sollicitée à son extrémité opposée à l'unité de piston (5) par une force de commande agissant dans la direction de l'unité de piston (5), et conjointement avec l'unité de piston (5), soit déplacée axialement d'une position (A) axiale équivalente à un état ouvert du mécanisme de verrouillage (3) ou d'une position (Z) axiale équivalente à un état fermé du mécanisme de verrouillage (3) et soit simultanément tournée suivant un angle de rotation prédéfini.

3. Système de frein de stationnement selon la revendication 2, **caractérisé en ce que** la tige de piston (12), après l'achèvement de l'actionnement par l'opérateur de l'élément d'actionnement (13), est déplacée de la position (A) axiale équivalente à l'état ouvert du mécanisme de verrouillage (3) par le dispositif de ressort (6) venant en prise sur l'unité de piston (5) dans la position axiale équivalente à l'état fermé du mécanisme de verrouillage (3).

4. Système de frein de stationnement selon la revendication 2 ou 3, **caractérisé en ce que** la tige de piston (12), après l'achèvement de l'actionnement par l'opérateur de l'élément d'actionnement (13), est déplacée de la position (Z) axiale équivalente à l'état fermé du mécanisme de verrouillage (3) par le dispositif de ressort (6) venant en prise sur l'unité de piston (5), dans la position (A) axiale équivalente à l'état ouvert du mécanisme de verrouillage (3).

5. Système de frein de stationnement selon l'une quelconque des revendications 2 à 4, **caractérisé en ce que** l'unité de piston (5) est réalisée à son extrémité opposée à la tige de piston (12) à sa périphérie, avec une région de blocage (14) s'étendant au moins en partie dans la direction périphérique, qui, après l'actionnement de l'élément d'actionnement (13) à partir d'une position (Z) axiale équivalente à l'état fermé du mécanisme de verrouillage (3), coopère avec le dispositif d'encliquetage (8) de telle sorte que l'unité de piston (5) soit maintenue par le dispositif d'encliquetage (8) dans la position (A) axiale équivalente à l'état ouvert du mécanisme de verrouillage (3).

6. Système de frein de stationnement selon la revendication 5, **caractérisé en ce que** la région de blocage (14), après un actionnement de l'élément d'actionnement (13) à partir de la position (A) axiale de l'unité de piston (5) équivalente à l'état ouvert du mécanisme de verrouillage (3), est tournée par rapport au dispositif d'encliquetage (8) de telle sorte qu'une activation du dispositif d'encliquetage (8) n'ait pas lieu et que l'unité de piston (5) soit déplacée par le dispositif de ressort (6) dans sa position (Z) axiale équivalente à l'état fermé du mécanisme de verrouillage (3).

7. Système de frein de stationnement selon l'une quelconque des revendications 1 à 6, **caractérisé en ce que** le dispositif d'encliquetage (8) est réalisé avec un levier d'encliquetage (15) suspendu à ressort dans la direction de l'unité de piston (5).

8. Système de frein de stationnement selon la revendication 7, **caractérisé en ce que** le levier d'encliquetage (15) est réalisé sur un côté frontal tourné vers l'unité de piston (5) avec un biseau de guidage (16), par le biais duquel le levier d'encliquetage (15), en cas de déplacement axial de l'unité de piston (5), est déplacé à l'encontre de la force de ressort de l'unité de ressort (17) associée au levier d'encliquetage (15) et est ainsi pivoté de sa position équivalente à l'état fermé du mécanisme de verrouillage (3) dans sa position équivalente à l'état ouvert du mécanisme de verrouillage (3).

9. Système de frein de stationnement selon la revendication 7 ou 8, **caractérisé en ce que** l'unité de piston (5) est réalisée sur un côté frontal tourné vers le levier d'encliquetage (15) avec une surface de guidage (18), sur laquelle est guidé le levier d'encliquetage (15) lors d'un déplacement axial de l'unité de piston (5) à l'encontre de la force de ressort de l'unité de ressort (17) associée au levier d'encliquetage (15), et est ainsi pivotée de sa position équivalente à l'état fermé du mécanisme de verrouillage (3) dans sa position équivalente à l'état ouvert du mécanisme de verrouillage (3).

10. Système de frein de stationnement selon la revendication 9, **caractérisé en ce que** le biseau de guidage (16) et la surface de guidage (18) coopèrent l'un avec l'autre de telle sorte que le levier d'encliquetage (15), en cas de déplacement axial de l'unité de piston (5) à l'encontre de la force de ressort de l'unité de ressort (17) associée au levier d'encliquetage (15), soit guidé avec son biseau de guidage (16) sur la surface de guidage (18) de l'unité de piston (5) et soit ainsi pivoté de sa position équivalente à l'état fermé du mécanisme de verrouillage (3) dans sa position équivalente à l'état ouvert du mécanisme de verrouillage (3).
